# EUROPEAN PATENT SPECIFICATION

(11) **EP 2 966 413 B1**
(45) Date of publication and mention of the grant of the patent: **24.02.2021**
(21) Application number: 15173914.1
(22) Date of filing: 25.06.2015
(51) Int. Cl.: G01D 5/14, G06F 1/16, H04M 1/02, A45C 11/00, G06F 1/3206, H04B 1/3888, H04M 1/67, H04M 1/18, H04M 1/725

(54) **ELECTRONIC EQUIPMENT WITH A SCREEN AND A PROTECTIVE COVER**
ELEKTRONISCHE EINRICHTUNG MIT EINEM BILDSCHIRM UND EINER SCHUTZABDECKUNG
ÉQUIPEMENT ÉLECTRONIQUE COMPRENANT UN ÉCRAN ET UN COUVERCLE DE PROTECTION

(30) Priority: 27.06.2014 CN 201410302987
(43) Date of publication of application: 13.01.2016
(73) Proprietor: Xiaomi Inc., Beijing 100085 (CN)
(72) Inventor: Sun, Wei, Beijing 100085 (CN); Lei, Zhenfei, Beijing 100085 (CN); Wang, Xiangdong, Beijing 100085 (CN)
(74) Representative: Cabinet Beau de Loménie

(56) References cited:
- EP-A1- 1 879 364
- CN-U- 203 524 031
- US-A1- 2014 071 036
- US-A1- 2014 159 839

## Description

### TECHNICAL FIELD

The present disclosure relates to the field of electronic equipment accessories, and more particularly, to a protective cover and an equipment having the protective cover.

### BACKGROUND

The screen of the current electronic equipment, such as smart mobile phone and panel PC, is getting increasingly large. During using, in order to protect the screen of the electronic equipment, it is usual to provide a protective cover for the electronic equipment, which can also play the function of screen lock and waking.

In order to play the function of screen lock and waking for the electronic equipment, the electronic equipment is usually provided with a Hall sensor, while the protective cover is provided with a magnet, so as to ensure that the Hall sensor is in the magnetic field of the magnet when the protective cover is closed. In order to make sure that the Hall sensor is able to be switched under the action of the magnet, it is necessary that the relative position between the Hall sensor and the magnet meets a high requirement. In some situation, there is a distance between the magnet and the Hall sensor in a transverse direction of the screen, such that when the protective cover is folded, the Hall sensor may be failed to be passed through by the magnet lines of the magnet if the cover moves right and left. Thus, it is usual to adopt a manner of increasing magnetic field intensity of the magnet so as to allow the Hall sensor to be passed through by the magnet lines of the magnet even if the protective cover moves right and left.

In a course of designing the present disclosure, the inventor found the following disadvantages in the relevant art: if the electronic equipment comprises an electronic compass, the stability of the electronic compass will be affected due to the increased magnetic field intensity, that is, the accuracy of the electronic compass is affected when the electronic compass is subjected to the magnet field of the magnet.

EP 1 879 364 describes a holster for receiving an electronic equipment that has a screen and a Hall sensor. The holster has a magnet positioned to face the Hall sensor when the electronic apparatus is fully inserted into the holster. Also, near the mouth of the holster there is an additional magnet arranged so that it opposes the Hall sensor when the electronic equipment starts to enter the holster, whereby a locking function of the electronic equipment can be activated as soon as the electronic equipment starts to enter the holster.

CN 203 524 031 describes a protective holder for an electronic device that has a screen, a Hall sensor and a compass. The protective holder has two magnets, one which faces the Hall sensor when the cover of the protective holder is completely closed against the screen, and one which faces the compass when the cover is completely closed.

US 2014/159839 describes a protective holder for an electronic device that has a screen and a magnetic field sensor. The cover includes a magnet positioned to face the magnetic field sensor when the cover completely overlies the screen of the electronic device. At the corners of the protective cover additional magnets are provided to hold the cover closed.

US 2014/071036 describes device covers which include a device cover identifier. The devices may, inter alia, be tablet computers. The device cover identifier can include one or more magnets, an RFID tag, colour, intensity or polarity of light passing through the cover, or textual or graphical information on the cover. The device is provided with a reader device capable of detecting the device cover identifier and discriminating one cover from another. The reader device may be a magnetically sensitive circuit including one or more Hall sensors.

### SUMMARY

In order to solve the problem in the relevant art that the stability of the electronic compass will be affected due to the increased magnetic field intensity, the present disclosure provides a system comprising an electronic equipment and a protective cover. The technical solutions are as below.

The present invention provides a system comprising an electronic equipment and a protective cover. The protective cover is configured to cover a screen of the electronic equipment and the electronic equipment has a Hall sensor.

In a first aspect, the protective cover is provided with a magnet body including magnets, characterized in that said magnets consist of a first magnet and a second magnet which are arranged in the cover such that: when the protective cover is closed and thus covers the screen, the projections of the first and second magnets on the screen are aligned with the Hall sensor, and are symmetrically located at both sides of the Hall sensor respectively, so magnetic field lines of the first and second magnets pass through the Hall sensor when the protective cover is closed and thus covers the screen, and when the protective cover moves on the screen in a direction parallel to a line formed between the first magnet and second magnet the Hall sensor is still able to be switched under the action of one of the first and second magnets.

Optionally, a line formed from the first magnet to the second magnet is parallel with the transverse direction of the screen; or the line formed from the first magnet to the second magnet is parallel with the longitudinal direction of the screen.

In a second aspect, the magnet body comprises magnets and the protective cover is characterized in that said magnets consist of at least two pairs of magnets, each pair of magnets is arranged in the protective cover such that: when the protective cover is closed and thus covers the screen, the projections of the magnets of each pair of magnets on the screen are aligned with the Hall sensor and are symmetrically located at both sides of the Hall sensor, respectively, and the minimum angle between a line formed between the magnets of a first pair of magnets and a line formed between the magnets of a second pair of magnets is larger than 0°, wherein, the first and second pairs of magnets are any two pairs of magnets in the magnet body and magnetic field lines of both magnets of a magnet-pair pass through the Hall sensor when the protective cover is closed and thus covers the screen, and when the protective cover moves on the screen in a direction parallel to a line formed between the magnets in a magnet-pair, the Hall sensor is still able to be switched under the action of at least one magnet of said magnet-pair.

The technical solutions according to embodiments of the present disclosure may have the following advantages.

By providing at least a first and a second magnet in the protective cover, the projections of the first and second magnets on the screen, when the protective cover completely covers the screen, being aligned with the Hall sensor, and symmetrically located at both sides of the Hall sensor respectively, then when the protective cover completely covers and moves on the screen, the magnetic field lines of at least one magnet of the two magnets are able to pass through the Hall sensor in the electronic equipment, such that the problem in the relevant art that the stability of the electronic compass will be affected due to the increased magnetic field intensity can be solved; when the protective cover completely covers the screen, the magnetic field lines of at least one magnet of the at least two magnets are able to pass through the Hall sensor in the electronic equipment, such that when the protective cover moves, the Hall sensor is still able to be passed through by the magnetic field lines of one of the magnets without increasing the magnetic field intensity, thus achieving a benefit of effectively ensuring the accuracy of screen lock and waking.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a diagram of an equipment having a protective cover and the protective cover in a closed state according to prior art;
Fig. 1B is a diagram showing that magnet lines of a magnet pass through a Hall sensor when the protective cover of Fig. 1A is closed;
Fig. 1C is a diagram showing that magnet lines of a magnet do not pass through a Hall sensor when the protective cover of Fig. 1A is closed;
Fig. 2A is a diagram of an equipment having a protective cover and the protective cover in a closed state according to an exemplary embodiment of the invention;
Fig. 2B is a diagram showing that magnet lines of a first and a second magnets pass through a Hall sensor when the protective cover of Fig. 2A is closed;
Fig. 2C is a diagram showing that magnet lines of the second magnet pass through the Hall sensor when the protective cover of Fig. 2A is closed;
Fig. 2D is a diagram showing that magnet lines of the first magnet pass through the Hall sensor when the protective cover of Fig. 2A is closed;
Fig. 2E is a diagram of a relationship of the relative positions between two magnets and the Hall sensor when the protective cover is closed according to an exemplary embodiment; and
Fig. 3 is a diagram of a relationship of the relative positions between four magnets and the Hall sensor when the protective cover is closed according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

"The electronic equipment" mentioned in the disclosure may be smart mobile phone, panel PC, smart TV, electronic reader, MP3 player (Moving Picture Experts Group Audio Layer III), MP4 (Moving Picture Experts Group Audio Layer IV) player, laptop, smart camera, smart video camera and so on.

In order to ensure that the Hall sensor in the electronic equipment is able to play the function of controlling standby for the electronic equipment when the protective cover is closed, there is usually provided with a magnet in the protective cover, and magnet lines of the magnet can pass through the Hall sensor when the protective cover is closed.

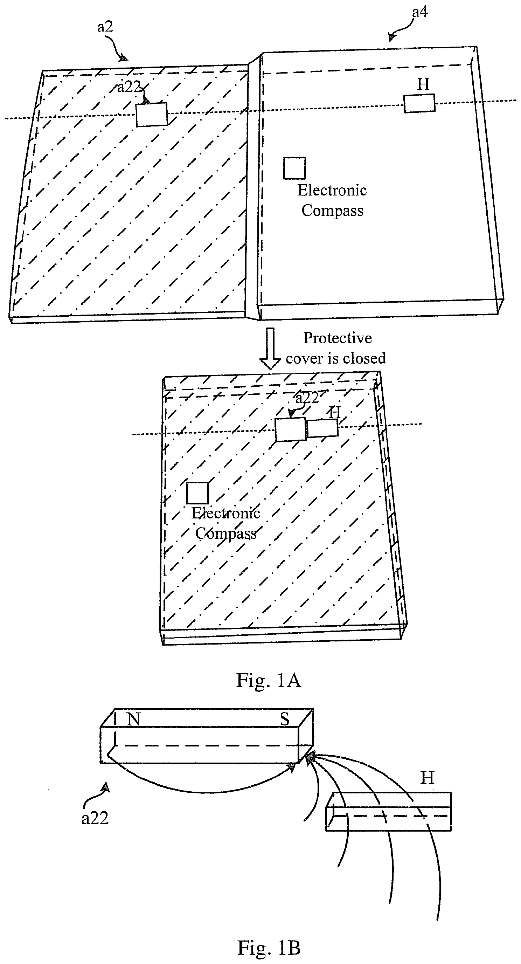

Particularly, referring to Fig. 1A, it is a diagram of an equipment having a protective cover and the protective cover in a closed state according to an exemplary embodiment. In Fig. 1A, a magnet a22 is located on a protective cover a2, and a Hall sensor H is located on an electronic equipment a4, wherein, the relative position between the magnet a22 and the Hall sensor H is configured such that: when the protective cover a2 is closed (i.e., the protective cover a2 covers on the screen of the electronic equipment a4), a line formed from the projection of the magnet a22 on the electronic equipment to the Hall sensor H is parallel with the transverse direction of the electronic equipment, in another word, when the protective cover a2 is closed, the projection of the magnet a22 on the electronic equipment is aligned with the Hall sensor H in the transverse direction of the electronic equipment a4. Here, the magnet a22 is located on a left side of the Hall sensor H.

The distance between the magnet a22 and the Hall sensor H aligned with each other in the transverse direction may be adjusted, such that the magnet lines of the magnet a22 can pass through the Hall sensor H when the protective cover a2 is closed. Referring to Fig. 1B, it is a diagram showing that the magnet lines of a magnet pass through a Hall sensor when the protective cover of Fig. 1A is closed. The magnet lines of the magnet a22 (i.e., magnet lines from pole N to pole S of the magnet a22) can pass through the Hall sensor H.

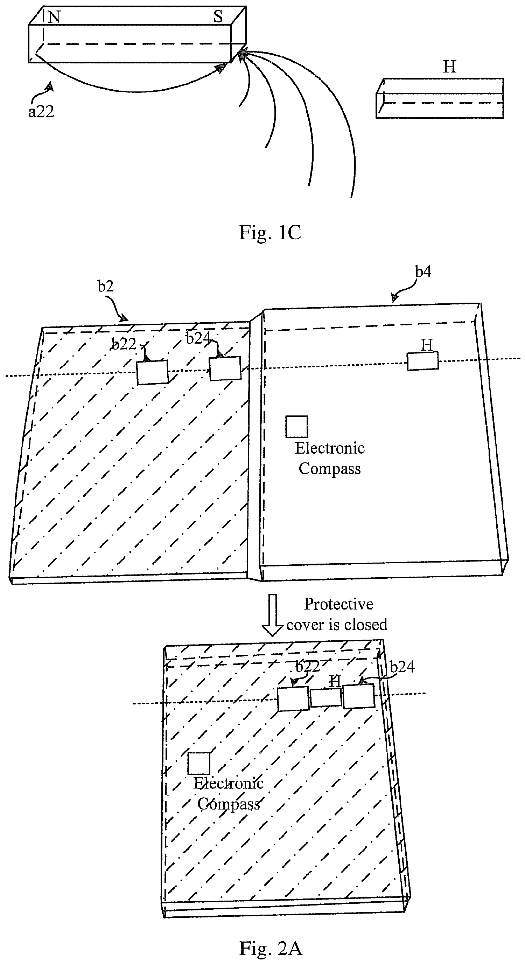

The magnet a22 is located at a fixed position on the protective cover a2, and the Hall sensor H is located at a fixed position on the electronic equipment a4, therefore, the relative position between the magnet a22 and the Hall sensor H is changed when the closed protective cover a2 moves right and left. For example, the magnet a22 at left side of the Hall sensor H moves towards the left side, such that the distance between the magnet a22 and the Hall sensor H is increased. Referring to Fig. 1C, it is a diagram showing that magnet lines of a magnet do not pass through a Hall sensor when the protective cover of Fig. 1A is closed. At this time, the magnet lines of the magnet a22 are prone to no longer pass through the Hall sensor H.

It is easily to conceive: in order to ensure that the magnet lines of the magnet a22 are still able to pass through the Hall sensor H even when the protective cover a2 moves, the magnetic field intensity of the magnet a22 may be increased. However, the electronic compass in the electronic equipment a4 is prone to be affected by the increased magnetic field intensity, which results in the accuracy being decreased.

Consequently, the protective cover in Fig. 1A needs to be improved and the invention proposes to provide a magnet body including at least two magnets, wherein magnet lines of at least one magnet can pass through the Hall sensor when the protective cover covers on the screen of the electronic equipment.

In a possible implementing manner, the magnet body may include a first magnet and a second magnet which are configured such that: when the protective cover covers on the screen of the electronic equipment, the projections of the first and second magnets on the screen are aligned with the Hall sensor, and are symmetrically located at both sides of the Hall sensor respectively. In order to prevent the magnet lines which pass through the Hall sensor from being affected when the protective cover moves right and left, a line formed from the first magnet to the second magnet may be configured to be parallel with the transverse direction of the screen when the protective cover covers on the screen of the electronic equipment. In order to prevent the magnet lines which pass through the Hall sensor from being affected when the protective cover moves up and down, a line formed from the first magnet to the second magnet may be configured to be parallel with the longitudinal direction of the screen.

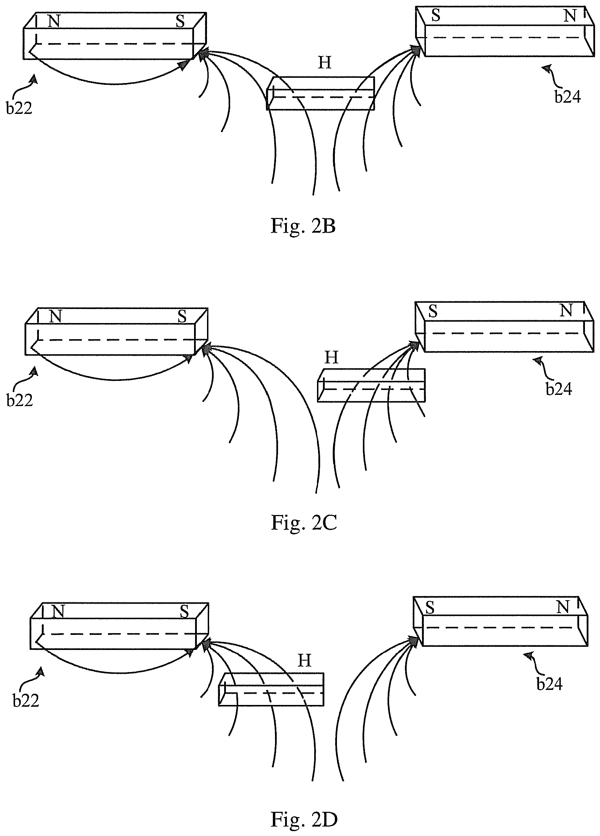

For example, referring to Fig. 2A, it is a diagram of an equipment having a protective cover and the protective cover in a closed state according to another exemplary embodiment. In Fig. 2A, a first magnet b22 and a second magnet b24 are located in a protective cover b2, and a Hall sensor H is located in an electronic equipment b4. When the protective cover b2 covers on the screen of the electronic equipment b4 from front, i.e., when the projections of the first magnet b22 and the second magnet b24 are located at both sides of the Hall sensor H respectively, refer to Fig. 2B which is a diagram showing that magnet lines of both the first and the second magnets pass through the Hall sensor when the protective cover of Fig. 2A is closed; as shown in Fig. 2B, the magnet lines of both the first magnet b22 and the second magnet b24 pass through the Hall sensor H.

For example, when the protective cover b2 as shown in Fig. 2A covers on the screen of the electronic equipment b4 and moves to the left, i.e., when the first magnet b22 is farther away from the Hall sensor H, then the second magnet b24 is much closer to the Hall sensor. Referring to Fig. 2C which is a diagram showing that magnet lines of the second magnet pass through the Hall sensor when the protective cover of Fig. 2A is closed, at this time, the first magnet b22 is farther away from the Hall sensor H, such that the magnet lines of the first magnet b22 no longer pass through the Hall sensor, while the second magnet b24 is much closer to the Hall sensor, such that the magnet lines of the second magnet b24 can still pass through the Hall sensor H.

For example, when the protective cover b2 as shown in Fig. 2A covers on the screen of the electronic equipment b4 and moves to the right, i.e., when the first magnet b22 is much closer to the Hall sensor H, then the second magnet b24 is farther away from the Hall sensor H. Referring to Fig. 2D which is a diagram showing that magnet lines of the first magnet pass through a Hall sensor when the protective cover of Fig. 2A is closed, at this time, the second magnet b24 is farther away from the Hall sensor H, such that the magnet lines of the second magnet b24 no longer pass through the Hall sensor, while the first magnet b22 is much closer to the Hall sensor, such that the magnet lines of the first magnet b22 can still pass through the Hall sensor H.

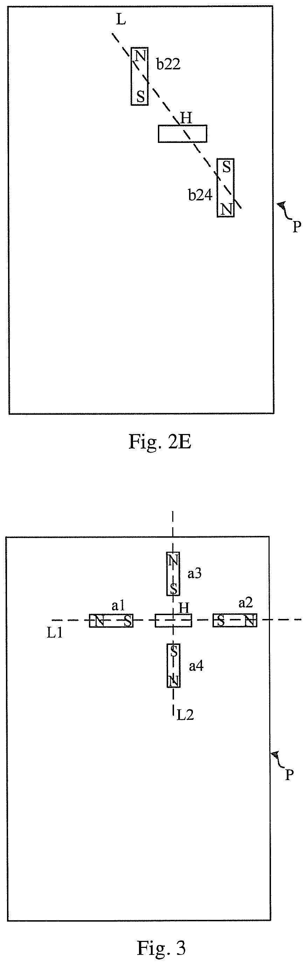

Apparently, when the protective cover covers on the screen of the electronic equipment, the angle between a line formed by the projections of the first and second magnets and the transverse direction of the screen may be arbitrary. As shown in Fig. 2E which is a diagram of a relationship of the relative positions between two magnets and the Hall sensor when the protective cover is closed according to an exemplary embodiment, the angle between a line L formed by the projections of the first magnet b22 and the second magnet b24 on the screen P and the transverse direction of the screen P may be a certain angle, for example, the angle may be 0°, i.e., the line L is parallel with the transverse direction of the screen P; the angle may be 90°, i.e., the line L is parallel with the longitudinal direction of the screen P; further, the angle may be larger than 0°and smaller than 90°.

According to a second embodiment of the invention, magnet body includes at least two pairs of magnets, each pair of magnets are configured such that: when the protective cover covers on the screen of the electronic equipment, the projections of each pair of magnets on the screen are symmetrically located at both sides of the Hall sensor. The minimum angle between a line formed by the first pair of magnets and a line formed by the second pair of magnets is larger than 0 (ie, these lines are not parallel)°. The first and second pairs of magnets are any two pairs of magnets in the magnet body. That is to say, the magnet body may include an even number of magnets (such as 2 pieces, 4 pieces, 6 pieces and so on). When the protective cover covers on the screen of the electronic equipment, the projections of each pair of magnets in the protective cover are symmetrically located at both sides of the Hall sensor, so as to ensure that when the protective cover moves along a line formed by the projections of each pair of magnets, the magnet lines of at least one magnet of the pair of magnets are able to pass through the Hall sensor. Apparently, the illustration for each pair of magnets may refer to Figs 2B, 2C and 2D.

For example, referring to Fig. 3, it is a diagram of a relationship of the relative positions between four magnets and the Hall sensor when the protective cover is closed according to an exemplary embodiment. A magnet body includes a pair of a first magnet a1 and a second magnet a2 and a pair of a third magnet a3 and a fourth magnet a4. When the protective cover is closed, the projections of the first magnet a1 and the second magnet a2 are located at left and right sides of a Hall sensor H respectively, i.e., a line L1 formed from the projection of the first magnet a1 to that of the second magnet a2 is parallel with the transverse direction of the screen P; the projections of the third magnet a3 and the fourth magnet a4 are located at upper and lower sides of the Hall sensor H respectively, i.e., a line L2 formed from the projection of the third magnet a3 to that of the fourth magnet a4 is parallel with the longitudinal direction of the screen P. Apparently, lines L1, L2 and the transverse direction of the screen P may be configured at other angles.

In conclusion, in the protective cover and the equipment having the protective cover provided by the embodiments of the present invention, by providing at least two magnets in the protective cover, when the protective cover covers and moves on the screen, the magnet lines of at least one magnet of the two magnets are able to pass through the Hall sensor in the electronic equipment, such that the problem in the relevant art that the stability of the electronic compass will be affected due to the increased magnetic field intensity can be solved; when the protective cover covers on the screen, the magnet lines of at least one magnet of the at least two magnets are able to pass through the Hall sensor in the electronic equipment, such that when the protective cover moves, the Hall sensor is still able to be passed through by the magnet lines of one of the magnets without increasing the magnetic field intensity, thus achieving a benefit of effectively ensuring the accuracy of screen lock and waking.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A system comprising an electronic equipment (b4) and a protective cover (b2), wherein:
the electronic equipment comprises a screen and a Hall sensor,
the protective cover (b2) is configured, when closed, to cover the screen of the electronic equipment (b4), and is provided with a magnet body comprising magnets (b22, b24),
**characterized in that** said magnets consist of a first magnet (b22) and a second magnet (b24) which are arranged in the protective cover such that: when the protective cover is closed and thus covers the screen, the projections of the first and second magnets on the screen are aligned with the Hall sensor (H), and are symmetrically located at both sides of the Hall sensor respectively, wherein magnetic field lines of the first and second magnets pass through the Hall sensor when the protective cover is closed and thus covers the screen, and when the protective cover moves on the screen in a direction parallel to a line (L) formed between the first magnet and second magnet the Hall sensor is still able to be switched under the action of one of the first and second magnets.

2. The system according to claim 1, **characterized in that** the line (L) formed from the first magnet (b22) to the second magnet (b24) is parallel with the transverse direction of the screen; or
the line formed from the first magnet to the second magnet is parallel with the longitudinal direction of the screen.

3. A system comprising an electronic equipment (b4) and a protective cover (b2), wherein:
the electronic equipment comprises a screen and a Hall sensor (H)
the protective cover (b2) is configured to cover the screen of the electronic equipment (b4), and is provided with a magnet body comprising magnets (b22, b24),
**characterized in that** said magnets consist of at least two pairs of magnets (a1, a2; a3, a4) each pair of magnets is arranged in the protective cover such that: when the protective cover is closed and thus covers the screen, the projections of the magnets of each pair of magnets on the screen are aligned with the Hall sensor (H) and are symmetrically located at both sides of the Hall sensor, respectively, and the minimum angle between a line (L1) formed between the magnets (a1, a2) of first pair of magnets and a line (L2) formed between the magnets (a3, a4) of a second pair of magnets is larger than 0°, wherein, the first and second pairs of magnets are any two pairs of magnets in the magnet body and magnetic field lines of both magnets of a magnet-pair pass through the Hall sensor when the protective cover is closed and thus covers the screen, and when the protective cover moves on the screen in a direction parallel to a line (L1, L2) formed between the magnets in a magnet-pair, the Hall sensor is still able to be switched under the action of at least one magnet of said magnet-pair.

4. The system according to claim 3, wherein said at least two pairs of magnets consist of a first pair of magnets and a second pair of magnets, a line (L1) formed between the magnets in said first pair of magnets is parallel with the transverse direction of the screen, and a line (L2) formed between the magnets in said second pair of magnets is parallel with the longitudinal direction of the screen.

## Patentansprüche

1. System, das eine elektronische Ausrüstung (b4) und eine Schutzabdeckung (b2) umfasst, wobei:
die elektronische Ausrüstung einen Bildschirm und einen Hallsensor umfasst,
die Schutzabdeckung (b2) so konfiguriert ist, dass sie, wenn sie geschlossen ist, den Bildschirm der elektronischen Ausrüstung (b4) bedeckt, und mit einem Magnetkörper versehen ist, der Magnete (b22, b24) umfasst,
**dadurch gekennzeichnet, dass** die Magnete aus einem ersten Magneten (b22) und einem zweiten Magneten (b24) bestehen, die in der Schutzabdeckung so angeordnet sind, dass, wenn die Schutzabdeckung geschlossen ist und somit den Bildschirm bedeckt, die Vorsprünge des ersten und des zweiten Magneten auf dem Bildschirm auf den Hallsensor (H) ausgerichtet sind und jeweils symmetrisch an beiden Seiten des Hallsensors angeordnet sind, wobei Magnetfeldlinien des ersten und des zweiten Magneten durch den Hallsensor verlaufen, wenn die Schutzabdeckung geschlossen ist und somit den Bildschirm bedeckt, und wenn sich die Schutzabdeckung auf dem Bildschirm in einer Richtung parallel zu einer Linie (L) bewegt, die zwischen dem ersten Magneten und dem zweiten Magneten gebildet ist, der Hallsensor immer noch in der Lage ist, unter der Wirkung eines des ersten und des zweiten Magneten geschaltet zu werden.

2. System nach Anspruch 1, **dadurch gekennzeichnet, dass**:
die von dem ersten Magneten (b22) zu dem zweiten Magneten (b24) gebildete Linie (L) parallel zur Querrichtung des Bildschirms verläuft oder
die von dem ersten Magneten zu dem zweiten Magneten gebildete Linie parallel zur Längsrichtung des Bildschirms verläuft.

3. System, das eine elektronische Ausrüstung (b4) und eine Schutzabdeckung (b2) umfasst, wobei:
die elektronische Ausrüstung einen Bildschirm und einen Hallsensor (H) umfasst,
die Schutzabdeckung (b2) so konfiguriert ist, dass den Bildschirm der elektronischen Ausrüstung (b4) bedeckt, und mit einem Magnetkörper versehen ist, der Magnete (b22, b24) umfasst,
**dadurch gekennzeichnet, dass** die Magnete aus mindestens zwei Magnetpaaren (a1, a2; a3, a4) bestehen, wobei jedes Magnetpaar in der Schutzabdeckung so angeordnet ist, dass, wenn die Schutzabdeckung geschlossen ist und somit den Bildschirm bedeckt, die Projektionen der Magnete jedes Magnetpaares auf dem Bildschirm auf den Hallsensor (H) ausgerichtet sind und jeweils symmetrisch an beiden Seiten des Hallsensors angeordnet sind, und der Mindestwinkel zwischen einer Linie (L1), die zwischen den Magneten (a1, a2) eines ersten Magnetpaares gebildet ist, und einer Linie (L2), die zwischen den Magneten (a3, a4) eines zweiten Magnetpaares gebildet ist, größer als 0° ist, wobei das erste und das zweite Magnetpaar zwei beliebige Magnetpaare in dem Magnetkörper sind und die Magnetfeldlinien beider Magnete eines Magnetpaares durch den Hall-Sensor verlaufen, wenn die Schutzabdeckung geschlossen ist und somit den Bildschirm bedeckt, und wenn sich die Schutzabdeckung auf dem Bildschirm in einer Richtung parallel zu einer zwischen den Magneten eines Magnetpaares gebildeten Linie (L1, L2) bewegt, der Hall-Sensor immer noch unter der Wirkung mindestens eines Magneten des Magnetpaares schaltbar ist.

4. System nach Anspruch 3, wobei die mindestens zwei Magnetpaare aus einem ersten Magnetpaar und einem zweiten Magnetpaar bestehen, eine zwischen den Magneten in dem ersten Magnetpaar gebildete Linie (L1) parallel zur Querrichtung des Bildschirms verläuft und eine zwischen den Magneten in dem zweiten Magnetpaar gebildete Linie (L2) parallel zur Längsrichtung des Bildschirms verläuft.

## Revendications

1. Système comprenant un équipement électronique (b4) et un couvercle de protection (b2), dans lequel :
l'équipement électronique comprend un écran et un capteur à effet Hall,
le couvercle de protection (b2) est configuré, lorsqu'il est fermé, pour couvrir l'écran de l'équipement électronique (b4), et est muni d'un corps magnétique comprenant des aimants (b22, b24),
**caractérisé en ce que** lesdits aimants consistent en un premier aimant (b22) et un deuxième aimant (b24) qui sont agencés dans le couvercle de protection de sorte que : lorsque le couvercle de protection est fermé et couvre ainsi l'écran, les projections des premier et deuxième aimants sur l'écran sont alignées avec le capteur à effet Hall (H), et sont situées symétriquement des deux côtés du capteur à effet Hall respectivement, dans lequel des lignes de champ magnétique des premier et deuxième aimants passent à travers le capteur à effet Hall lorsque le couvercle de protection est fermé et couvre ainsi l'écran, et lorsque le couvercle de protection se déplace sur l'écran dans une direction parallèle à une ligne (L) formée entre le premier aimant et le deuxième aimant, le capteur à effet Hall peut encore être commuté sous l'action de l'un des premier et deuxième aimants.

2. Système selon la revendication 1, **caractérisé en ce que** la ligne (L) formée du premier aimant (b22) au deuxième aimant (b24) est parallèle à la direction transversale de l'écran ; ou
la ligne formée du premier aimant au deuxième aimant est parallèle à la direction longitudinale de l'écran.

3. Système comprenant un équipement électronique (b4) et un couvercle de protection (b2), dans lequel :
l'équipement électronique comprend un écran et un capteur à effet Hall (H) le couvercle de protection (b2) est configuré pour couvrir l'écran de l'équipement électronique (b4), et est muni d'un corps magnétique comprenant des aimants (b22, b24),
**caractérisé en ce que** lesdits aimants consistent en au moins deux paires d'aimants (a1, a2 ; a3, a4) chaque paire d'aimants est agencée dans le couvercle de protection de sorte que : lorsque le couvercle de protection est fermé et couvre ainsi l'écran, les projections des aimants de chaque paire d'aimants sur l'écran sont alignées avec le capteur à effet Hall (H) et sont situées symétriquement des deux côtés du capteur à effet Hall, respectivement, et l'angle minimum entre une ligne (L1) formée entre les aimants (a1, a2) d'une première paire d'aimants et une ligne (L2) formée entre les aimants (a3, a4) d'une deuxième paire d'aimants est supérieur à 0°, dans lequel, les première et deuxième paires d'aimants sont deux paires d'aimants quelconques dans le corps magnétique et les lignes de champ magnétique des deux aimants d'une paire d'aimants passent à travers le capteur à effet Hall lorsque le couvercle de protection est fermé et couvre ainsi l'écran, et lorsque le couvercle de protection se déplace sur l'écran dans une direction parallèle à une ligne (L1, L2) formée entre les aimants d'une paire d'aimants, le capteur à effet Hall peut encore être commuté sous l'action d'au moins un aimant de ladite paire d'aimants.

4. Système selon la revendication 3, dans lequel lesdites au moins deux paires d'aimants consistent en une première paire d'aimants et une deuxième paire d'aimants, une ligne (L1) formée entre les aimants de ladite première paire d'aimants est parallèle à la direction transversale de l'écran, et une ligne (L2) formée entre les aimants de ladite deuxième paire d'aimants est parallèle à la direction longitudinale de l'écran.
